# DEMANDE DE BREVET EUROPEEN

(11) **EP 1 052 534 A1**
(43) Date de publication de la demande: **15.11.2000**
(21) Numéro de dépôt: 00401162.3
(22) Date de dépôt: 27.04.2000
(51) Int. Cl.: G02B 6/44

(54) **Cable à fibre optique à propriétés améliorées**

(30) Priorité: 06.05.1999 FR 9905764
(71) Demandeur: ALCATEL, 75008 Paris (FR)
(72) Inventeur: Prigent, Madeleine, 91460 Marcoussis (FR); Vanpoulle, Sophie, 91190 Gif sur Yvette (FR)
(74) Mandataire: Laroche, Danièle

(57) **Abrégé**

La présente invention a pour objet un câble comprenant au moins une fibre optique et au moins une couche de revêtement comprenant un matériau incluant un composé organique et un composé inorganique, caractérisé en ce que ledit composé inorganique a une structure feuilletée et en ce que ledit composé organique est inséré entre les feuillets dudit composé inorganique.

## Description

La présente invention concerne un câble à fibre optique dont les propriétés, notamment mécaniques, hydrofuges, et ignifuges, sont sensiblement améliorées par rapport aux câbles actuellement connus. Ces câbles sont utilisés pour la transmission d'informations.

L'invention concerne plus particulièrement le matériau inclus dans l'une des couches de revêtement placée autour d'une fibre ou d'un ensemble de fibres.

D'une manière générale, ces câbles comportent une ou plusieurs fibres optiques. Chaque fibre est constituée d'un coeur optique entouré d'une gaine optique. La fibre est entourée d'au moins une couche d'un revêtement protecteur. Les fibres peuvent être rassemblées, en ruban ou en faisceau, et l'ensemble des fibres est alors entouré à son tour d'une ou plusieurs couches d'un revêtement protecteur.

Le revêtement a pour rôle de protéger la ou les fibres optiques vis à vis des agressions mécaniques extérieures, la pénétration d'humidité et si nécessaire d'assurer une isolation électrique. En outre en cas d'incendie il doit permettre une résistance suffisante au feu. Actuellement la plupart de ces revêtements comporte une matrice continue, généralement en polymère, contenant éventuellement des particules d'une charge qui peut être inorganique.

La présente invention a pour but de proposer un câble à fibre optique dont les caractéristiques, notamment mécaniques, hydrofuges et ignifuges, sont sensiblement améliorées par rapport aux câbles actuellement connus.

L'objet de la présente invention est un câble comprenant au moins une fibre optique et au moins une couche de revêtement comprenant un matériau incluant un composé organique et un composé inorganique, caractérisé en ce que ledit composé inorganique a une structure feuilletée et en ce que ledit composé organique est inséré entre les feuillets dudit composé inorganique.

Actuellement des charges minérales sont fréquemment utilisées dans l'une ou l'autre des couches de revêtement des câbles, mais ces charges, dont la taille des particules est de l'ordre du micron, sont dispersées dans un polymère et conservent leur taille initiale après malaxage avec ce polymère.

Selon la présente invention on utilise un composé inorganique à structure feuilletée qui, après un traitement spécifique, permettra l'intercalation d'un composé organique entre ses feuillets. Ce composé inorganique a une dimension initiale de particules de l'ordre du micron. Lorsqu'un composé organique est inséré entre les feuillets, le composé inorganique s'exfolie formant un matériau composite. Après l'intercalation du composé organique et l'exfoliation du composé inorganique, ce dernier est réparti de manière homogène dans le matériau composite et présente une dimension de particules de l'ordre du nanomètre. On observe alors une amélioration sensible des propriétés du matériau, ainsi que l'apparition de propriétés particulières.

Par "constitué essentiellement", on entend que la couche peut comporter en outre en moindre quantité des adjuvants destinés notamment à faciliter sa mise en forme (plastifiant, lubrifiant, etc...), à ralentir son vieillissement (stabilisant, absorbeur d'U.V., ignifugeant, anti-oxygène, agent anti-choc, etc...) ou à en modifier l'apparence (pigment coloré, etc...).

Le composé inorganique peut être choisi parmi un graphite et un oxyde minéral à structure feuilletée. On choisira du graphite si on souhaite obtenir un couche conductrice, et un oxyde minéral si l'on souhaite obtenir une couche qui soit électriquement isolante. Dans le cas présent, on choisi de préférence un oxyde. Parmi les oxydes minéraux, on pourra choisir un oxyde métallique à condition qu'il présente une structure feuilletée, par exemple une alumine, un titanate ou une zircone, ou bien encore un silicate à structure feuilletée appelé phyllosilicate.

De préférence l'oxyde inorganique est un silicate à structure feuilletée ou phyllosilicate, et de préférence encore un alumino-silicate comme un mica ou une argile naturelle ou artificielle, éventuellement pontée. De préférence l'argile présente une structure cristalline formée d'un empilement de feuillets et possède des ions OH⁻ superficiels. Parmi les argiles, on pourra choisir un talc, une vermiculite, une kaolinite ou une smectite ou un mélange quelconque de plusieurs argiles. De préférence encore on choisira le groupe des smectites, notamment la montmorillonite, la bentonite, la beidellite, la nontronite, la saponite, l'hectorite ou un mélange des précédentes.

Selon un mode préférentiel de réalisation de la présente invention, l'argile choisie est la montmorillonite, aussi appelée "Fullers earth" lorsqu'elle contient du calcium et connue aussi sous le nom de bentonite lorsqu'elle contient du sodium.

Le composé organique intercalé entre les feuillets du composé inorganique est de préférence un polymère, un oligomère ou un monomère qu'on polymérisera in situ.

Lorsque le matériau de l'invention est utilisé comme revêtement protecteur d'une fibre, on utilisera de préférence un polymère choisi parmi un polyester, un polyéther, comme un polyéther vinylique, un polyuréthane, comme un polyuréthane acrylate, un maléate, un fumarate, un polythiol notamment un dithiol, un polyène, un copolymère ou un mélange des polymères précédemment cités comme les systèmes maléate / fumarate ou polythiol / polyène. Des polymères tels que des résines époxy, des polyimides, des polyamides, des silicones peuvent également être traités de façon similaire.

Dans un procédé de fabrication de câble par extrusion, on utilisera un polymère extrudable qui peut être choisi parmi une polyoléfine comme le polyéthylène (PE) et le polypropylène (PP), le polytéréphtalate de butylène (PBTP), un polymère vinylique comme le chlorure de polyvinyle (PVC), un élastomère qui peut être halogéné ou non, ou bien encore thermoplastique, un silicone, leurs copolymères comme les copolymères de l'éthylène, et un mélange des précédents. Parmi les copolymères de l'éthylène on peut choisir un copolymère d'éthylène et d'acétate de vinyle (EVA), un copolymère d'éthylène et de propylène (EPR), un copolymère d'éthylène et d'acrylate d'alkyle comme le copolymère d'éthylène et d'acrylate d'éthyle (EEA) ou d'acrylate de méthyle (EMA), un copolymère d'éthylène et d'acide acrylique, un terpolymère de l'éthylène, ou ces mêmes polymères comportant des groupements fonctionnels spécifiques (acides, époxy, etc...).

Dans un procédé de fabrication de câble mettant en oeuvre les polymères à l'état liquide, on utilisera un polymère choisi parmi une résine époxy, un polyester, un polyimide, comme un polyétherimide ou un polyamidimide, un polyamide (PA), un polyuréthane, un silicone, un copolymère ou un mélange des polymères précédemment cités.

L'invention s'applique notamment à une fibre optique entourée d'au moins une couche de revêtement qui est constituée essentiellement du matériau. Une pluralité de fibres munies d'un tel revêtement peuvent être associées en vue de constituer un câble.

Les câbles à fibres optiques actuellement utilisés pour les transmissions à grandes distances sont de deux types. Un premier type a une structure dite alvéolées ou libre, c'est à dire qu'il comporte un ou plusieurs éléments sous forme de jonc rainuré ou de tube dans lequel sont logées les fibres optiques. Un deuxième type de câbles à fibres optiques est à structure dite en ruban, c'est à dire que les fibres optiques sont disposées parallèlement les unes aux autres.

Une première application de la présente invention concerne les câbles enterrés de télécommunication. De tels câbles comportent une pluralité de fibres optiques. Le revêtement extérieur du câble comprend au moins une couche constituée essentiellement du matériau selon l'invention.

Une autre application concerne les câbles sous-marins de télécommunication. De tels câbles comportent un faisceau de fibres optiques et au moins un revêtement isolant entourant le faisceau comprenant au moins une couche est constituée essentiellement du matériau selon l'invention.

L'invention a aussi pour objet un procédé de fabrication d'un câble comprenant au moins une fibre optique et au moins une couche de revêtement constituée essentiellement d'un matériau réalisé selon les étapes suivantes :
- on traite le composé inorganique par un agent de manière à assurer sa compatibilité avec le composé organique,
- on mélange le composé inorganique traité avec le composé organique à une température supérieure à la température de ramollissement ou de fusion du composé organique, et
- on obtient le matériau, le composé organique étant insérée entre les feuillets du composé inorganique.

Le composé inorganique est traité avec un agent tensio-actif compatible avec le composé organique de façon à favoriser l'intercalation du composé organique entre les feuillets du composé inorganique.

Selon un mode de réalisation de la présente invention, le composé inorganique est une argile et l'agent compatibilisant est choisi parmi un sel d'ammonium quaternaire, un oxyde de polyéthylène et un dérivé phosphoré.

D'autres caractéristiques et avantages de la présente invention apparaîtront au cours des exemples suivants de réalisation, donnés bien entendu à titre illustratif et non limitatif, et dans le dessin annexé sur lequel
- la figure 1 est une vue schématique en coupe d'un conducteur optique formé d'une fibre optique entourée de son revêtement protecteur,
- la figure 2 est une vue schématique en coupe d'un faisceau de conducteurs optiques rassemblé dans un tube,
- la figure 3 est une vue schématique en coupe d'un câble de télécommunication terrestre,
- la figure 4 est une vue schématique en coupe d'un câble de télécommunication sous-marin.

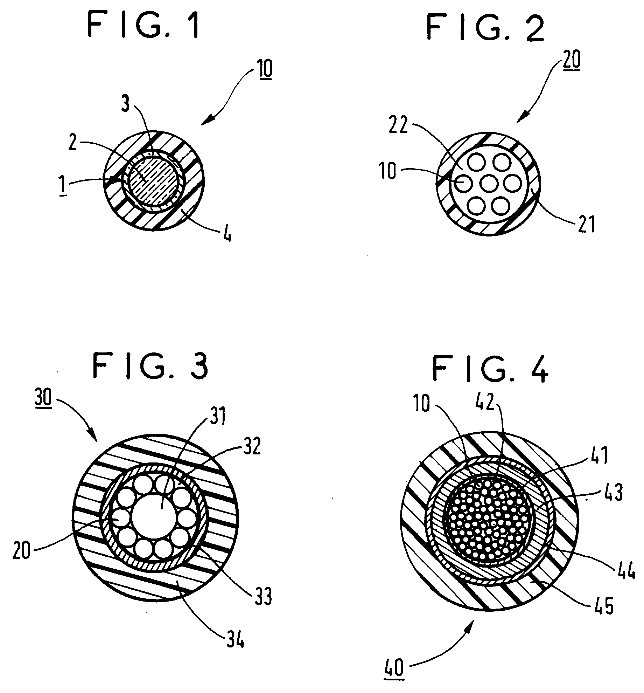

Sur la figure 1, on a représenté un conducteur optique 10 comprenant une fibre optique 1 constituée d'un coeur optique 2 entouré d'une gaine optique 3 (cladding). La fibre 1 est entourée d'au moins une couche d'un revêtement protecteur 4 (coating). Le revêtement protecteur 4 est constitué essentiellement du matériau selon l'invention.

Afin d'assurer une meilleure tenue mécanique et une protection contre les chocs, les conducteurs optiques 10 peuvent être assemblés en un faisceau qui est placé à l'intérieur d'un tube 21 en polymère, par exemple du PP ou du PBTP, comme le montre la figure 2. Les conducteurs 10 sont séparées les unes des autres par un matériau de remplissage 22 (filling compound) qui est généralement une graisse.

Sur la figure 3, on a représente un câble 30 à fibres optiques pour des applications terrestre, et donc destiné à être enterré. Plusieurs tubes 21, analogues à ceux de la figure 2, sont disposés à la périphérie d'un jonc 31 souvent renforcé par des fibres de verre et au contact d'un matériau de remplissage 32. L'ensemble est entouré d'une armature métallique 33 surmontée d'une gaine 34 qui doit avoir de bonnes propriétés mécaniques, une bonne tenue au feu et une faible perméabilité à l'eau. La gaine 34 est constituée essentiellement du matériau selon l'invention réalisé de la manière suivante.

On malaxe 10g de bentonite avec 3g de chlorure de 2-oleybis -hydroxyéthyl méthyl ammonium, commercialisé sous l'appellation "ETHOQUAD" par la société AKZO, et on porte le mélange à 60°C. Le mélange est ensuite soumis aux ultrasons pendant 2mn. Le sel d'ammonium s'intercale entre les feuillets de l'argile.

On ajoute alors la charge traitée au composé organique, qui est du polyéthylène basse densité (VLDPE), à raison de 5% en poids. Ce mélange est malaxé pendant 5mn à 160°C, puis extrudé ou moulé autour du câble.

On mesure par diffraction X l'évolution de la distance interfeuillets du composé inorganique. Cette distance a augmenté de 40% ce qui assure la bonne intercalation du polymère entre les feuillets du silicate. Ce type de matériau d'intercalation est couramment désigné sous le terme de "nanocomposite".

Les avantages apportés par l'utilisation du matériau selon la présente invention sont indiqués dans le tableau suivant. On y constate plus particulièrement une nette amélioration du comportement au feu et une diminution du coefficient de transmission d'eau.

| | art antérieur | invention |
|---|---|---|
| Tenue mécanique : contrainte à la rupture allongement | 28,5MPa 570% | 34MPa 604% |
| Coefficient de transmission d'eau (norme ASTM E 96) | 43.10⁻⁶ g/m²/24h | 33.10⁻⁶g/m²/24h |
| Comportement au feu (norme ASTM D 2863) | le matériau brûle et coule | le matériau ne coule pas, il charbonne |

Dans le cas d'un câble sous-marin 40 comme représenté sur la figure 4, les conducteurs optiques 10 sont assemblés en un faisceau qui est placé à l'intérieur d'un tube 41 métallique. Les conducteurs 10 sont séparées les unes des autres par un matériau de remplissage 42 comme un gel. Le tube métallique 41 est entouré d'une armature d'acier 43, elle-même surmontée d'une couche conductrice 44, par exemple en cuivre. Le revêtement externe 45 doit avoir de bonnes propriétés mécaniques et notamment une bonne tenue à l'abrasion et une très faible absorption d'eau puisqu'il doit assurer l'isolation du câble isolant pendant au moins 25 ans. Ce revêtement est constitué essentiellement du ) matériau selon l'invention réalisé de la manière précédemment décrite.

Pour réaliser le revêtement protecteur (coating) d'une fibre optique avec le matériau selon l'invention, on procède de manière analogue en mélangeant le composé inorganique traitée au composé organique habituellement utilisé, comme par exemple un polymère thermoplastique, comme un polyester ou un polyuréthane, ou une résine photopolymérisable, comme une résine uréthane, acrylate, maléate / fumarate ou polythiol / polyène. La mise en oeuvre de ce matériau est analogue à celle des matériaux utilisés habituellement pour revêtir les fibres : enduction de la fibre avec le matériau et polymérisation sous UV dans le cas d'un polymère photodurcissable. Dans le cas de l'utilisation du matériau selon l'invention comme revêtement protecteur d'une fibre optique, les propriétés d'étanchéité à l'eau du revêtement sont sensiblement améliorées.

## Revendications

1. Câble comprenant au moins une fibre optique et au moins une couche de revêtement comprenant un matériau incluant un composé organique et un composé inorganique, caractérisé en ce que ledit composé inorganique a une structure feuilletée et en ce que ledit composé organique est inséré entre les feuillets dudit composé inorganique.

2. Câble selon la revendication 1, dans lequel ledit composé inorganique est un oxyde minéral à structure feuilletée.

3. Câble selon la revendication 2, dans lequel ledit oxyde minéral est choisi parmi un oxyde métallique à structure feuilletée et un silicate à structure feuilleté, ou phyllosilicate.

4. Câble selon la revendication 3, dans lequel ledit silicate à structure feuilletée est choisi parmi un mica et une argile.

5. Câble selon la revendication 4, dans lequel ladite argile est choisie parmi un talc, une vermiculite, une kaolinite, une smectite, et un mélange des précédents.

6. Câble selon la revendication 5, dans lequel ladite smectite est choisi parmi la montmorillonite, la bentonite, la beidellite, la nontronite, la saponite, l'hectorite, et un mélange des précédentes.

7. Câble selon la revendication 5, dans lequel ladite argile est choisie parmi la montmorillonite et la bentonite.

8. Câble selon l'une des revendications précédentes, dans lequel ledit composé organique est un polymère, un monomère ou un oligomère.

9. Câble selon la revendication 8, dans lequel ledit composé est un polymère choisi parmi un polyester, un polyéther, un polyéther vinylique, un polyuréthane, un polyuréthane acrylate, un maléate, un fumarate, un polythiol, un polyène, un copolymère ou un mélange des précédents.

10. Câble selon la revendication 8, dans lequel ledit polymère est choisi parmi une polyoléfine, un polytéréphtalate de butylène, un polymère vinylique, un élastomère, un silicone, leurs copolymères et un mélange des précédents.

11. Câble selon la revendication 8, dans lequel ledit polymère est choisi parmi une résine époxy, un polyester, un polyamide, un polyimide, un polyétherimide, un polyamidimide, un polyuréthane, un silicone ou un mélange des précédents.

12. Câble selon l'une des revendications précédentes, comportant une fibre optique entourée d'un revêtement protecteur dont au moins une couche est constituée essentiellement dudit matériau.

13. Câble selon l'une des revendications précédentes, comportant une pluralité de fibres optiques et un revêtement extérieur dont au moins une couche est constituée essentiellement dudit matériau.

14. Câble selon l'une des revendications précédentes, comportant un faisceau de fibres optiques et un revêtement isolant dont au moins une couche est constituée essentiellement dudit matériau.

15. Procédé de fabrication d'un câble selon l'une des revendications précédentes, comprenant la réalisation dudit matériau par les étapes suivantes :
- on traite ledit composé inorganique par un agent de manière à assurer sa compatibilité avec ledit composé organique,
- on mélange ledit composé inorganique traité avec ledit composé organique à une température supérieure à la température de ramollissement ou de fusion dudit composé organique,
- on obtient ledit matériau, ledit composé organique étant inséré entre les feuillets dudit composé inorganique.

16. Procédé selon la revendication 12, dans lequel ledit composé inorganique est une argile et ledit agent compatibilisant est choisi parmi un sel d'ammonium quaternaire, un oxyde de polyéthylène et un dérivé phosphoré.
